# EUROPÄISCHE PATENTSCHRIFT

(11) **EP 0 687 097 B1**
(45) Veröffentlichungstag und Bekanntmachung des Hinweises auf die Patenterteilung: **20.08.2003**
(21) Anmeldenummer: 95107946.6
(22) Anmeldetag: 23.05.1995
(51) Int. Cl.: H04M 11/00

(54) **Einrichtung für eine Einsatzleitzentrale**
Arrangement for a head office for supervision of interventions
Arrangement pour une centrale de commande des interventions

(30) Priorität: 01.06.1994 DE 9408973 U
(43) Veröffentlichungstag der Anmeldung: 13.12.1995
(73) Patentinhaber: SIEMENS AKTIENGESELLSCHAFT, 80333 München (DE)
(72) Erfinder: Danker, Olaf, D-24536 Neumünster (DE); Löser, Horst, D-51465 Bergisch-Gladbach (DE); Porada, Dieter, D-50823 Köln (DE)

(56) Entgegenhaltungen:
- GB-A- 2 142 506
- GB-A- 2 215 557
- US-A- 4 914 420

## Beschreibung

Die Erfindung bezieht sich auf eine Einrichtung für eine Einsatzleitzentrale gemäß dem Oberbegriff des Patentanspruchs 1.

Für die Abwicklung von Einsätzen von Fahrzeugen für die Feuerwehr, die Polizei oder andere ähnliche Organisationen sind Einsatzleitzentralen vorgesehen, in denen mit Hilfe von Einsatzleitrechnern und geeigneten Komponenten zur Ansteuerung der peripheren Alarmgeber, wie Alarmlicht, Rolltorstellglieder, Lautsprecheranlagen usw., die Abwicklung des Einsatzes an Leitplätzen vorgenommen wird. Neben den Einsatzleitplätzen sind am Einsatzleitrechner für den Anschluß der peripheren Komponenten eine Vielzahl von Schnittstellen erforderlich, was als nachteilig angesehen wird. Außerdem muß der Einsatzleitrechner doppelt ausgelegt werden, um bei einem eventuellen Ausfall des Leitrechners den Betrieb aufrechterhalten zu können.

Aufgabe der Erfindung ist es, eine Einrichtung vorzusehen, welche es ermöglicht, die Schnittstellen am Einsatzleitrechner erheblich zu reduzieren und dennoch eine sichere und zuverlässige Alarmabwicklung sowohl in der Einsatzleitzentrale als auch mit Unterwachen sicherzustellen.

Diese Aufgabe wird erfindungsgemäß mit einer Einrichtung gemäß dem Anspruch 1 gelöst.

In einer Einsatzleitzentrale, die zumindest einen Einsatzleitrechner mit angeschlossenen Einsatzleitplätzen, mit Bedien-, Anzeige- und Ansteuerungseinrichtungen aufweist, sind auch noch Funkmeldeanlagen und Telekommunikationsanlagen für den Datenaustausch mit Wachalarmeinheiten in den einzelnen Unterwachen angeschlossen. Neben anderen peripheren Komponenten sind auch Sicherheitsmeldeanlagen am Einsatzleitrechner angeschlossen. Erfindungsgemäß ist ein Steuerungsprozeßrechner in der Einsatzleitzentrale vorgesehen, der am Einsatzleitrechner, in der Regel über eine serielle Schnittstelle, angeschlossen ist. Dabei werden sämtliche Informationen zwischen dem Einsatzleitrechner und der gesamten Peripherie in einer gesicherten Prozedur über den Steuerungsprozeßrechner ausgetauscht. Zu diesem Zweck sind die Bedien-, Anzeige- und Ansteuereinrichtungen, die Funkmeldeanlagen, die Sicherheitsmeldeanlagen und die Telekommunikationsanlage, diese beispielsweise über eine Kommunikationsschnittstelle, am Steuerungsprozeßrechner angeschlossen. Das hat den Vorteil, daß am Einsatzleitrechner neben den Anschlüssen für die Einsatzleitplätze und der Telekommunikationsanlage nur noch eine einzige Schnittstelle für den Steuerungsprozeßrechner notwendig ist. Darüber hinaus kann bei Ausfall des Einsatzleitrechners über Bedieneinrichtungen, die am Steuerungsprozeßrechner angeschlossen sind, mittels des Steuerungsprozeßrechners die Alarmabwicklung durchgeführt werden.

In der Regel führt der Leitrechner die Verarbeitung aller Daten durch. Der Leitrechner enthält alle wesentlichen Informationen über Wachpersonal, Einheiten, örtliche Gegebenheiten, Alarmanforderungen und so fort. Über, zum Beispiel ein LAN-Netz, werden Terminals an den Einsatzleitplätzen mit dem Rechner verbunden. Der Rechner ist mit einer Telekommunikationsanlage verbunden, die Alarmforderungen entgegennimmt und weitergibt. Der nun erfindungsgemäß am Leitrechner angeordnete Steuerungsprozeßrechner übernimmt die Kommunikation mit allen Systemkomponenten, die in einer Einsatzleitzentrale vorgesehen sein können. Dies sind beispielsweise die Ansteuerung von Rolltoren, Türüberwachungen, Wartenwand und Lichtsignalanlagen, ferner die Kommunikation mit Videoanlagen und mit einer Funkmeldeanlage. Des weiteren erfolgt die Aufnahme und Auswertung von Störungsmeldungen ebenfalls über den Steuerungsprozeßrechner.

Im Falle des Rechnerausfalls erfolgt die Kommunikation mit Handbedienfeldern, die am Steuerungsprozeßrechner angeschlossen sind. Die Kommunikation mit den örtlich abgesetzten Wachalarmeinrichtungen der Unterwachen wird über eine Kommunikationsanlage abgewickelt, welche mit den Unterwachen in Verbindung steht und sowohl am Einsatzleitrechner als auch über eine entsprechende Schnittstelle am Steuerungsprozeßrechner angeschlossen ist. Im Regelfall findet der Datenaustausch über den Einsatzleitrechner, gesteuert vom Steuerungsprozeßrechner statt. Bei Ausfall des Leitrechners geht die Datenkommunikation von und zu den Unterwachen über die Telekommunikationsanlage und der dafür vorgesehenen Schnittstelle unmittelbar über den Steuerungsprozeßrechner. Die erfindungsgemäße Einrichtung hat also den Vorteil, daß bei Ausfall des Leitrechners, also des untersten Rückstufungsfalls, der Steuerungsprozeßrechner alle wesentlichen Aufgaben zur reibungslosen Abwicklung der Einsätze übernimmt. Es können also weiterhin Funkmeldungen der Einsatzkräfte und Störmeldungen der Unterwachen und Außenstellen entgegengenommen und weiterverarbeitet werden. Über Handbedienfelder kann das Wachpersonal weiterhin Alarmierungen durchführen, da auch die Anzeigeeinrichtung (Wartenwand) weiterhin in Betrieb gehalten wird und ständig mit aktuellen Informationen versorgt wird, so daß das Wachpersonal immer auf dem neuesten Stand bleibt. Da über die Telekommunikationsanlage die Unterwachen weiterhin erreicht werden können, ist eine Kommunikation zwischen dem Steuerungsprozeßrechner und den Wachalarmeinrichtungen in den Unterwachen weiterhin problemlos und ohne Einschränkungen möglich. In vorteilhafter Weise kann der Steuerungsprozeßrechner von einem handelsüblichen Prozeßrechner gebildet sein, wie er aus Automatisierungssystemen, z.B. SIMATIC, bekannt ist.

In einer zweckmäßigen Ausgestaltung der Erfindung ist die Telekommunikationsanlage von einer Sonderfernsprecheinrichtung mit City-Ruf und Fax-Box sowie von einer ISDN-fähigen Kommunikationseinrichtung gebildet, welche sowohl untereinander als auch jeweils mit dem Einsatzleitrechner und dem Steuerungsprozeßrechner verbunden sind. Die Kommunikationseinrichtung kann beispielsweise eine HICOM 300-Anlage sein. Dabei ist es zweckmäßig, die Einsatzleitzentrale und die Unterwachen über ein ISDN-Netz zu verbinden, wobei in der Wachalarm-Einrichtung der Unterwache eine Telekommunikationseinrichtung, beispielsweise eine HICOM 200-Anlage vorgesehen sein kann. Alle Alarmierungen von der Einsatzleitzentrale zu den Unterwachen laufen über diese Telekommunikationseinrichtungen. Umgekehrt sendet die Unterwache Störmeldungen an die Zentrale über die HICOM 300-Anlage und diese wiederum an den Steuerungsprozeßrechner zur Weiterverarbeitung.

Um den Totalausfall einer Unterwache in der Einsatzleitzentrale zu registrieren, werden von der Wachalarmeinrichtung Überlebenstelegramme an die Zentrale, d.h. an den Steuerungsprozeßrechner, gesendet. Einen Ausfall der Telekommunikationseinrichtung (HICOM 300) registriert der Steuerungsprozeßrechner ebenfalls. Es wird dann eine entsprechende Alarmprozedur eingeleitet. Die Wachen werden per Funk (Funkmeldeanlagen) und/oder über die Sonderfernsprecheinrichtung informiert. In der Unterwache schaltet die Wachalarmeinrichtung auf das dortige Handbedienfeld um, so daß die unterwachenspezifischen Alarmabläufe von dort aus durchgeführt werden können.

Um auch beim Ausfall des Einsatzleitrechners alle Einsätze bzw. Alarmabwicklungsvorgänge registrieren zu können, ist in der Einsatzleitzentrale zweckmäßigerweise ein separater PC vorgesehen, der sowohl an der Sonderfernsprecheinrichtung als auch über die Kommunikationsschnittstelle an dem Steuerungsprozeßrechner angeschlossen ist. Auf diese Weise können die Daten für die Alarmabwicklung gespeichert, ausgewertet, die Kosten erfaßt und Statistiken erstellt werden.

Zur Erhöhung der Verfügbarkeit der Einsatzleitzentrale kann der Steuerungsprozeßrechner gedoppelt sein.

Im folgenden wird die Erfindung an einer beispielhaften Darstellung in Form eines schematischen Blockschaltbildes erläutert.

In dem einzigen Bild ist eine Einsatzleitzentrale EZ dargestellt, an die über eine ISDN-Verbindung beispielhaft eine Unterwache UW angeschlossen ist. Der Einsatzleitrechner ER mit den daran angeschlossenen Leitplätzen LP übernimmt im normalen Wachalarmbetrieb mit der zugehörigen Router-, Hubund Serverarchitektur die Steuerung der Alarmorganisation. Die Komponenten sind über ein LAN-Netz der Form Ethernet oder einem ähnlichen miteinander verbunden, ein Netzwerkmanager organisiert den Telegrammverkehr. In einer Datenbank des Einsatzleitrechners sind alle relevanten Informationen wie Stadtpläne, besondere Gegebenheiten, Personal etc., wie an sich bekannt, hinterlegt. Diese Daten können durch sog. Tagesinformationen aktualisiert werden. Es werden alle Einsätze gespeichert und ausgewertet. Dabei ist es möglich, Kosten zu erfassen, diese weiterzugeben und Statistiken zu führen.

Im Falle einer Alarmanforderung gibt der Einsatzleitrechner ER die Einsatzleitbefehle an einen Steuerungsprozeßrechner PR weiter. Er selbst ist für die Bearbeitung weiterer Aufgaben frei. Der Steuerungsprozeßrechner PR baut über die Telekommunikationsanlage TKA eine Verbindung zu einer Unterwache UW auf und sendet ein Alarmtelegramm, welches wiederum von der dezentralen Wachalarmeinrichtung WAE aufgenommen und umgesetzt wird. Zur Herstellung der Verbindung, dies kann auch eine Wahlverbindung sein, zur Unterwache, ist die Telekommunikationsanlage TKA vorgesehen, die eine Telekommunikationseinrichtung KOM, beispielsweise HICOM 300, aufweist und zweckmäßigerweise über eine ISDN-Verbindung mit einer in der Unterwache UW vorgesehenen Kommunikationseinrichtung KOM (z.B. HICOM 200)verbunden ist. Der Steuerungsprozeßrechner PR überwacht die korrekte Alarmierung und gibt eine Rückmeldung an den Einsatzleitrechner ER weiter. Der Kommunikationseinrichtung KOM, die am Einsatzleitrechner ER angeschlossen ist, ist eine Sonderfernsprecheinrichtung SOF zugeordnet, die mit dem Einsatzleitrechner ER und der Kommunikationseinrichtung KOM verbunden ist. Ferner ist die Sonderfernsprecheinrichtung SOF, die einen City-Ruf und eine Fax-Box aufweist, über eine Kommunikationsschnittstelle KS mit dem Steuerungsprozeßrechner PR verbunden. Die Kommunikationseinrichtung KOM ist über diese Kommunikationsschnittstelle KS ebenfalls mit dem Prozeßrechner PR verbunden. Das ermöglicht einen Datenaustausch mittels des Steuerungsprozeßrechners PR über den Einsatzleitrechner ER oder unmittelbar vom Prozeßrechner PR her gesteuert über die Telekommunikationseinrichtung KOM oder im Notfall, wenn diese ausfällt, auch über die Sonderfernsprecheinrichtung SOF. Um beim Ausfall des Einsatzleitrechners ER auch noch die Daten für Einsatzlenkung und Alarmabwicklung protokollieren zu können, ist ein eigener PC vorgesehen, der einerseits an der Sonderfernsprecheinrichtung SOF und andererseits über die Kommunikationsschnittstelle KS am Steuerungsprozeßrechner PR angeschlossen ist.

Sämtliche peripheren Komponenten der Einsatzleitzentrale EZ sind am Steuerungsprozeßrechner PR angeschlossen. Beispielsweise sind hier dargestellt eine Sicherheitsmeldeanlage SMA, eine Torsteuerung ST, eine Ansteuerung einer Lichtsignalanlage LSA, Anzeigeeinrichtungen ANZ, wie Wartenwand (z.B. Großbildmonitore) zur Anzeige der aktuellen Fahrzeugzustände und eine Videoanlage VA. Ferner sind an dem Steuerungsprozeßrechner PR Funkmeldeanlagen FMA sowie Einrichtungen zur Erfassung von Störungsmeldungen STA angeschlossen. Ein oder mehrere Handbedienfelder BE sind ebenfalls am Steuerungsprozeßrechner PR angeschlossen, über die im Falle des Ausfalls des Einsatzleitrechners ER die Einsatzbefehle und Alarmierungsabwicklungen erfolgen.
Die Unterwache UW weist eine Wachalarmeinrichtung WAE auf, wie sie in dem Gebrauchsmuster G 92 10 926.8 beschrieben ist. Die Verbindung zur Einsatzleitzentrale EZ wird in der Wachalarmeinrichtung WAE über die Kommunikationseinrichtung KOM, beispielsweise HICOM 200, hergestellt. In der Unterwache UW kann ebenfalls ein Prozeßrechner SP für die Ablaufsteuerung vorgesehen sein, sowie eine Außenstelle AS. Die Ausgestaltung der Wachalarmeinrichtung ist aber nicht Gegenstand der Erfindung.

Über die Funkmeldeanlage FMA in der Einsatzleitzentrale EZ werden Fahrzeugmeldungen entgegengenommen und ausgewertet. Dabei werden die Daten selektiert und weitergegeben, so daß die Fahrzeugzustände an die über einem Bildkommunikationsprozessor angeschlossene Wartenwand (ANZ) angezeigt und an den Rechner zur Auswertung und zur Berücksichtigung der weiteren Alarmanforderung gemeldet werden können.

Der Steuerungsprozeßrechner PR hat noch eine weitere wichtige Aufgabe, nämlich im Normalbetrieb die Entgegennahme und Auswertung von Störungsmeldungen aus den Unterwachen UW und aus den Einsatzleitzentralen EZ selbst durchzuführen. Dazu ist STA vorgesehen. Die Störmeldungen werden nach Prioritätskriterien ausgewertet und an diese Störmeldungseinrichtung STA gegeben, die in der Regel einen eigenen PC aufweist. Ausgewählte Daten werden dem Einsatzleitrechner ER zur Verfügung gestellt. Über das Handbedienfeld BE kann das Wachpersonal bei Ausfall des Einsatzleitrechners ER die Alarmierungen in die Unterwachen UW auslösen, da eine Korrespondenz über die Telekommunikationseinrichtung KOM bzw. über die Sonderfernsprecheinrichtung SOF weiterhin gewährleistet ist.

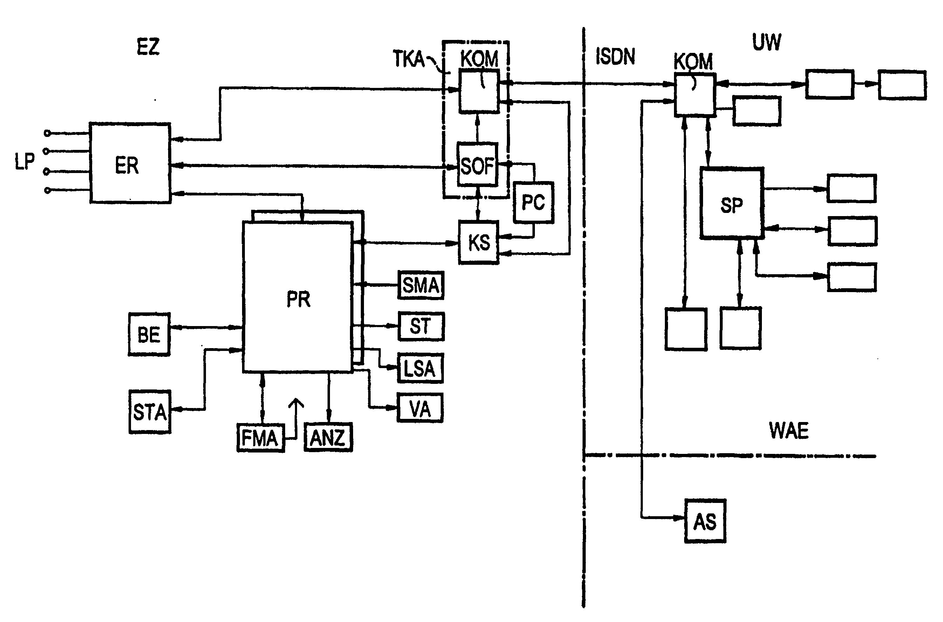

## Patentansprüche

1. Einrichtung für eine Einsatzleitzentrale (EZ) mit zumindest einem Einsatzleitrechner (ER) mit Einsatzleitplätzen (LP), mit Bedien-, Anzeige- und Ansteuerungseinrichtungen (BE, ANZ, ST) mit mindestens einer Funkmeldeanlage (FMA) und mit einer Telekommunikationsanlage (TKA) für den Datenaustausch mit Wachalarmeinrichtungen (WAE) in Unterwachen (UW) sowie mit angeschlossenen Sicherheitsmeldeanlagen (SMA),
**dadurch gekennzeichnet, daß** ein Steuerungsprozeßrechner (PR) vorgesehen ist, der an dem Einsatzleitrechner (ER) angeschlossen ist, daß sämtliche Informationen zwischen dem Einsatzleitrechner (ER) und der gesamten Peripherie (BE, ANZ, ST, WAE, usw.) in einer gesicherten Prozedur über den Steuerungsprozeßrechner (PR) ausgetauscht werden, daß hierzu die Bedien-, Anzeige- und Ansteuerungseinrichtungen (BE, ANZ, ST), die Funkmeldeanlage (FMA) die Sicherheitsmeldeanlagen (SMA) und die Telekommunikationsanlage (TKA), diese über eine Kommunikationsschnittstelle (KS), am Steuerungsprozeßrechner (PR) angeschlossen sind, und daß bei Ausfall des Einsatzleitrechners (ER) mittels des Steuerungsprozeßrechners (PR) über die Bedieneinrichtung (BE) die Alarmabwicklung (Einsatzleitung) durchführbar ist.

2. Einrichtung nach Anspruch 1,
**dadurch gekennzeichnet, daß** die Telekommunikationsanlage (TKA) von einer Sonderfernsprecheinrichtung (SOF) mit City-Ruf und Fax-Box und von einer ISDN-fähigen Kommunikationseinrichtung (KOM) gebildet ist, welche sowohl miteinander als jeweils mit dem Einsatzleitrechner (ER) und dem Steuerungsprozeßrechner (PR) verbunden sind.

3. Einrichtung nach Anspruch 1 oder 2,
**dadurch gekennzeichnet, daß** die Wachalarmeinrichtung (WAE) der Unterwachen (UW) über das ISDN-Netz an der Einsatzleitzentrale (EZ) angeschlossen sind.

4. Einrichtung nach Anspruch 2 oder 3,
**dadurch gekennzeichnet, daß** in der Einsatzleitzentrale (EZ) ein separater PC vorgesehen ist, der bei Ausfall des Einsatzleitrechners (ER) alle Einsätze bzw. Alarmabwicklungsvorgänge registriert, und der dazu sowohl an der Sonderfernsprecheinrichtung (SOF) als auch über die Kommunikationsschnittstelle (KS) an dem Steuerungsprozeßrechner (PR) angeschlossen ist.

5. Einrichtung nach einem der vorhergehenden Ansprüche,
**dadurch gekennzeichnet, daß** der Steuerungsprozeßrechner (PR) gedoppelt ist.

6. Einrichtung nach einem der vorhergehenden Ansprüche,
**dadurch gekennzeichnet, daß** eine Einrichtung zur Erfassung von Störmeldungen (STA) am Steuerungsprozeßrechner (PR) angeschlossen ist.

7. Einrichtung nach einem der vorhergehenden Ansprüche,
**dadurch gekennzeichnet, daß** der Steuerungsprozeßrechner von einem handelsüblichen Prozeßrechner gebildet ist.

8. Einrichtung nach einem der vorhergehenden Ansprüche,
**dadurch gekennzeichnet, daß** die Ansteuerungseinrichtungen (ST), wie Rolltorsteuerung, Videoüberwachung, Zugangskontrolle, Lichtsignalanlagen, usw., über I/O-Ports mit jeweils eine Zweidrahtleitung am Steuerungsprozeßrechner (PR) angeschlossen sind.

## Claims

1. Device for an operations management centre (EZ) having at least one operations management computer (ER) having operations management stations (LP), having control, display and actuation devices (BE, ANZ, ST) having at least one radio signalling installation (FMA) and having a telecommunications installation (TKA) for data interchange with sentry-alarm devices (WAE) in subsentries (UW) and with connected security signalling installations (SMA),
**characterized in that** a control process computer (PR) is provided which is connected to the operations management computer (ER), **in that** all the information between the operations management computer (ER) and the entire peripheral area (BE, ANZ, ST, WAE, etc.) is interchanged in a secure procedure via the control process computer (PR), **in that** for this purpose the control, display and actuation devices (BE, ANZ, ST), the radio signalling installation (FMA), the security signalling installations (SMA) and the telecommunications installation (TKA), the latter via a communications interface (KS), are connected to the control process computer (PR), and **in that** in the event of failure of the operations management computer (ER), the control process computer (PR) can be used, using the control device (BE), to perform alarm handling (operations management).

2. Device according to Claim 1,
**characterized in that** the telecommunications installation (TKA) is formed by a special-purpose telephone device (SOF) with City-Ruf paging and Fax-Box and by an ISDN-compatible communications device (KOM) which are connected both to one another and respectively to the operations management computer (ER) and the control process computer (PR).

3. Device according to Claim 1 or 2,
**characterized in that** the sentry-alarm devices (WAE) in the subsentries (UW) are connected to the operations management centre (EZ) via the ISDN network.

4. Device according to Claim 2 or 3,
**characterized in that** the operations management centre (EZ) contains a separate PC which, in the event of failure of the operations management computer (ER), records all operations or alarm handling procedures and, to this end, is connected both to the special-purpose telephone device (SOF) and via the communications interface (KS) to the control process computer (PR).

5. Device according to one of the preceding claims,
**characterized in that** the control process computer (PR) is duplicated.

6. Device according to one of the preceding claims,
**characterized in that** a device for detecting fault reports (STA) is connected to the control process computer (PR).

7. Device according to one of the preceding claims,
**characterized in that** the control process computer is formed by a commercially available process computer.

8. Device according to one of the preceding claims,
**characterized in that** the actuation devices (ST), such as sliding-door control, video surveillance, access control, light-signal installations, etc., are connected to the control process computer (PR) via I/O ports using a respective two-wire line.

## Revendications

1. Dispositif destiné à un centre de commande d'interventions (EZ) ayant, au moins, un ordinateur de commande des interventions (ER) avec des pupitres de commande des interventions (LP), avec des dispositifs de commande, d'affichage et de sélection (BE, ANZ, ST), avec, au moins, une installation de signalisation par radio (FMA) et avec une installation de télécommunication (TKA) destinée à l'échange de données avec des dispositifs d'alarme (WAE) dans des postes secondaires de veille (UW), ainsi que des installations de signalisation de sécurité (SMA), qui y sont raccordées,
**caractérisé par le fait qu'**il est prévu un ordinateur industriel de commande (PR), lequel est raccordé à l'ordinateur de commande des interventions (ER), que l'ensemble des informations est échangé, par l'intermédiaire de l'ordinateur industriel de commande (PR), entre l'ordinateur de commande des interventions (ER) et l'ensemble de la périphérie (BE, ANZ, ST, WAE, etc.), dans le cadre d'une procédure protégée, que, à cet effet, les dispositifs de commande, d'affichage et de sélection (BE, ANZ, ST), l'installation de signalisation par radio (FMA), les installations de signalisation de sécurité (SMA) et l'installation de télécommunication (TKA), celle-ci par l'intermédiaire d'une interface de communication (KS), sont raccordés à l'ordinateur industriel de commande (PR) et que, en cas de défaillance de l'ordinateur de commande des interventions (ER), le traitement des alarmes (commande des interventions) peut être effectué au moyen de l'ordinateur industriel de commande (PR), par l'intermédiaire du dispositif de commande (BE).

2. Dispositif selon la revendication 1
**caractérisé par le fait que** l'installation de télécommunication (TKA) est formée par une installation à postes téléphoniques spéciaux (SOF) avec service de messagerie (paging) et fax-box, et par un dispositif de communication (KOM), compatible RNIS, lesquels sont reliés non seulement l'une à l'autre, mais aussi chacun à l'ordinateur de commande des interventions (ER) et à l'ordinateur industriel de commande (PR).

3. Dispositif selon la revendication 1 ou 2
**caractérisé par le fait que** les dispositifs d'alarme (WAE) des postes secondaires de veille (UW) sont raccordés au centre de commande d'interventions (EZ) par l'intermédiaire du réseau RNIS.

4. Dispositif selon la revendication 2 ou 3
**caractérisé par le fait qu'**il est prévu, dans le centre de commande d'interventions (EZ), un PC (ou ordinateur personnel) séparé qui enregistre, en cas de défaillance de l'ordinateur de commande des interventions (ER), toutes les interventions et, respectivement, tous les processus de traitement des alarmes et qui est, à cet effet, raccordé non seulement à l'installation à postes téléphoniques spéciaux (SOF), mais aussi, par l'intermédiaire de l'interface de communication (KS), à l'ordinateur industriel de commande (PR).

5. Dispositif selon l'une des revendications précédentes
**caractérisé par le fait que** l'ordinateur industriel de commande (PR) est doublé.

6. Dispositif selon l'une des revendications précédentes
**caractérisé par le fait qu'**un dispositif destiné à l'enregistrement de messages de dérangements (STA) est raccordé à l'ordinateur industriel de commande (PR).

7. Dispositif selon l'une des revendications précédentes
**caractérisé par le fait que** l'ordinateur industriel de commande est constitué par un ordinateur industriel usuel dans le commerce.

8. Dispositif selon l'une des revendications précédentes
**caractérisé par le fait que** les dispositifs de commande (ST), tels qu'une commande de porte coulissante, une surveillance par vidéo, un contrôle d'accès, des installations de signalisation lumineuse, etc. sont raccordés, par l'intermédiaire de portes d'entrée/sortie avec chacune un câble bifilaire, à l'ordinateur industriel de commande (PR).
